# EUROPEAN PATENT SPECIFICATION

(11) **EP 3 549 141 B1**
(45) Date of publication and mention of the grant of the patent: **12.04.2023**
(21) Application number: 17823015.7
(22) Date of filing: 30.11.2017
(51) Int. Cl.: G21C 17/06, G21C 19/10, G21C 19/18, G01B 5/00, G21C 3/334

(54) **INSPECTION DEVICE OF NUCLEAR FUEL ASSEMBLY**
INSPEKTIONSVORRICHTUNG FÜR KERNBRENNSTABBÜNDEL
DISPOSITIF D'INSPECTION D'ASSEMBLAGE DE COMBUSTIBLE NUCLÉAIRE

(30) Priority: 01.12.2016 CZ 20160755
(43) Date of publication of application: 09.10.2019
(73) Proprietor: Skoda JS a.s., 316 00 Plzen (CZ); CEZ a.s., 140 53 Praha 4 (CZ)
(72) Inventor: RAUSCH, Ivan, 323 00 Plzen (CZ); BUKVAR, David, 323 00 Plzen (CZ); BENES, Vaclav, 330 11 Tremosna (CZ); STIPEK, Marko, 375 01 Tyn nad Vltavou (CZ)
(74) Representative: Pavlica, Tomas
(86) International application number: PCT/CZ2017/000075
(87) International publication number: WO 2018/099497

(56) References cited:
- DE-A1-102012 001 110
- FR-A1- 2 395 571
- FR-A1- 2 753 266

## Description

### Field of invention

The nuclear fuel assembly inspection device according to the present invention is used to inspect nuclear reactor fuel assemblies, namely for dimensional measurements and visual checks of individual fuel assemblies during nuclear powerplant shutdowns. Particularly the device according to this invention can be used in those nuclear power plants where the fuel assembly inspection pool is located in the reactor hall, such as the VVER 1000, MIR 1200 type nuclear power plants.

### State of the art

Inspection devices currently used to measure and inspect fuel assemblies are adapted to conduct visual checks of fuel assemblies and to measure fuel assemblies for torsion and deflection.

A fuel assembly visual inspection device is used to inspect fuel assemblies by inspection means having special water- and radiation-tight cameras. An example of such device is described in document WO2007111554(A1). The document describes a system using four or five cameras to inspect all four sides of a fuel assembly at a time. It may be installed in a special fuel-handling building or in the transport corridor between this building and the containment. This system is used, for instance, in the Ringhals Nuclear Power Plant in Sweden with PWR reactors and in other nuclear power plants in Korea and in the USA.

The facilities inspecting fuel assemblies for torsion or deflection occurring due to strain use several technologies and procedures. Fuel assembly strain inspection is possible by means of a camera during the visual check, for instance. However, this method is not among the most precise ones and is rather time-intensive. At present, ultrasonic or LVDT sensor measurements are used. An example of such device is described in document US4759897. The device is equipped with 73 ultrasonic probes. The probes are installed on a steel structure located in the spent fuel pool where the measurement is conducted. In document US4728483, fuel assembly length is measured by means of two transmitters, of which one is located in the upper part and the other in the lower part, being inclined at an angle of 45°. This makes it possible to measure lengths of all fuel assembly types. The overall growth of the fuel assembly is detected by means of the upper sensor. Document DE10 2012 001110 A1 discloses an inspection device according to the preamble of claim 1.

The disadvantages of these facilities are that the individual equipment parts are only able to perform one of the required fuel assembly inspections and mostly outside the fuel storage pool. In dependence on the concept selected, such solutions may be difficult technologically and time-intensive in terms of installation, and may also require a large space for installation and a long period of time to perform the required operations.

### Summary of the invention

The inspection device of nuclear fuel assembly according to the present invention is set in the claim 1. Further advantageous embodiments of the invention are set in the dependent claims 2 to 6. A method of inspection of fuel assemblies (30) arranged in a storage rack (40) in a fuel pool (20) by using the inspection device (10) is set in claim 7. The device according to the invention is intended to perform dimensional and/or visual inspections of fuel assemblies located in the fuel assembly pool. For the purposes of this application, the term fuel assembly pool means a pool used for a temporary storage of fuel assemblies containing nuclear fuel, the pool being filled with a coolant, mostly being water with a content of boric acid. The fuel assembly pool may be a spent fuel assembly pool located in the reactor hall, where the fuel assembly inspection is most frequently conducted during a reactor shutdown period. The fuel assembly inspection device according to the present invention is autonomous in essence and, especially preferably, it makes it possible to inspect fuel assemblies without using any other means, e.g. the nuclear fuel refuelling machine, so that it does not block its use during shutdown. The term refuelling machine means the device firmly installed in the reactor hall and used to transport fuel assemblies from/into the fuel assembly pool and from/into the nuclear reactor. The great advantage of the fuel assembly inspection device according to the present invention is that it can be used to carry out dimensional and/or visual checks of the fuel assemblies during the reactor shutdown period, while minimally restricting the other works associated with the reactor shutdown.

The nuclear fuel assembly inspection device according to the present invention is defined in the main patent claim. Its advantageous embodiments are then specified in the dependent patent claims. According to another aspect of this invention a method of fuel assembly inspections is also provided, which is also described in the respective patent claims together with its advantageous variants.

The advantages of the fuel assembly inspection device according to the present invention are as follows:
- The device makes possible to inspect fuel assemblies located in selected cells of the storage rack located in the fuel assembly pool.
- The device according to the present invention makes possible to perform easily and quickly at least some of the following inspections of selected fuel assemblies or preferably all of them:
   - Visual check of fuel assembly
   - Check of fuel assembly length
   - Check of fuel assembly torsion and deflection
- Owing to the inventive method of inspection execution according to other aspect of this invention, the device makes it possible during essentially one working cycle of inspection to conduct all above-mentioned checks without increasing the need of time for the inspection as it uses preferably the necessary movements of the fuel assembly to perform the inspection. Fuel assembly length is measured preferably by means of a measuring probe arranged on the inspection block of the inspection column so that after lowering the inspection block to the storage rack and the inspection block getting into contact with the storage rack the measuring probe measures the height of the fuel assembly protruding above the storage rack, while the length of the fuel assembly part to the upper surface of the storage rack in the given place is known. Measurement of torsion and deflection of the fuel assembly is performed especially preferably by means of the measuring probes arranged outside the fuel assembly, while measuring the distances of the fuel assembly surface from the measuring probe in several height levels always in one level transversal to the longitudinal axis of the fuel assembly, which makes it possible to establish fuel assembly deflection and torsion. The stage of lifting the fuel assembly from the storage rack into the inspection block can be preferably used to perform a visual check of the fuel assembly by means of inspection block cameras. The cameras are preferably located at the inspection block bottom and their number corresponds preferably to one half of the number of the external walls of the fuel assembly; in this case, the movement of the fuel assembly when being pulled into the inspection block to the position for measuring torsion and deflection will be used preferably to make a visual check of one half of the number of the external walls of the fuel assembly. Therefore, if cameras in the number corresponding to one half of the number of the external walls of the fuel assembly are used when lowering the fuel assembly into the storage rack, the cameras will be turned by the relevant angle to scan the other half of the number of the walls. This arrangement reduces the number of cameras required and also cuts the operation time, with the period of time needed to lift/lower the fuel assembly from/into the storage rack being used to scan the fuel assembly wall surface.
- The device reduces the possibility of damaging the fuel assembly by placing the fuel assembly inspection device during fuel assembly inspection over the fuel assembly being inspected so that the fuel assembly need not be moved during the inspection operations outside the area above its cell in the storage rack. All inspection operations will be performed above the respective storage rack cell where the fuel assembly being inspected is located so that the fuel assembly being inspected is not transported over the other fuel assemblies in the storage rack, which are thereby not threatened by incorrect manipulation or fall of the fuel assembly being inspected.
- Owing to the autonomous design of the fuel inspection device according to the invention, which comprises both travelling and handling means to perform fuel assembly inspection and owing to the fact that the activity is conducted preferably in the place of fuel assembly storage in the fuel pool where no other works are conducted during reactor shutdown, the refuelling machine is not blocked.
- The fuel inspection device according to the invention is adapted preferably for installation between the pool coolant surface and the lower edge of the refuelling machine, which makes it possible to carry out works with the refuelling machine concurrently.
- Travel of the fuel inspection device along the fuel pool is secured preferably with rails located in the upper part of the fuel pool, which accelerates the assembly and disassembly works of the device. The rails may preferably be located there permanently but may also be installed in a way facilitating dismantling.
- The ease of mounting of the device comprising in essence only two separate assembly units, i.e. the travelling positioning device and the inspection column, which are relatively easily set onto the preferably firmly installed railway without any complicated adjustment, will shorten the assembly and disassembly of this device and thereby also the reactor shutdown period.
- The ease of device transportation where the fuel assembly inspection device is completely dismantled from the fuel pool after inspection and can be stored outside the reactor hall.
- Possibility of reliable and easy locking in position above the storage rack cells defining the position of the fuel assemblies, with the working position of the device according to the invention above the cell containing the fuel assembly to be inspected being locked reliably according to the below-described arrangement without any difficult procedure of setting the device. This locking feature also serves preferably as a safety element for seismic events.
- Use of the fuel assembly gripping means to lower and lift the whole inspection block where the two grip positions (open/close) only are used preferably to handle either the fuel assembly or the inspection block while using one lifting device of the grip.
- The fuel assembly inspection device makes use of the inspection block seated on the storage rack to guide the fuel assembly after being pulled out of the respective storage rack cell, whereby preferably protecting the fuel assembly by preventing it from falling outside the cell after being pulled out of it.
- The device according to the invention is designed preferably so as not to allow lifting a fuel assembly above the critical height, so that it prevents lifting the fuel assembly even in case of an operator's or system's fault above the pre-defined safe height, whereby making sure that the fuel assembly will remain submerged at all times.
- The handling of the fuel assembly is conducted preferably in compliance with the procedures approved for work with the refuelling machine, whereby not increasing in any way the requirements for the currently permitted operations performed with the fuel assembly (gripping locations of and forces acting on the fuel assembly).
- Owing to its design described herein, the device according to the invention ensures operator's safety during the inspections and device assembly and disassembly works.

### Description of drawings

The fuel assembly inspection device according to the present invention will be described further with reference to the figures, in which:
Fig. 1 presents a front view of an embodiment of the fuel assembly inspection device according to the invention located in the fuel inspection pool;
Fig. 2 presents a top view of the embodiment according to the invention from Fig. 1;

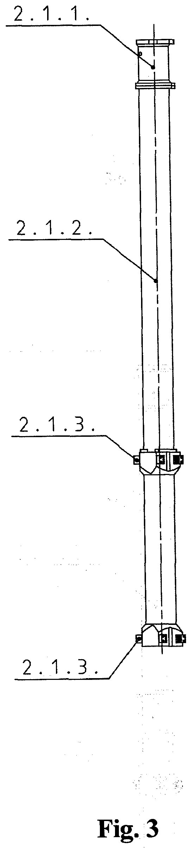

Fig. 3 presents a view of the fixed part of the inspection column of the embodiment of the invention from Fig. 1;

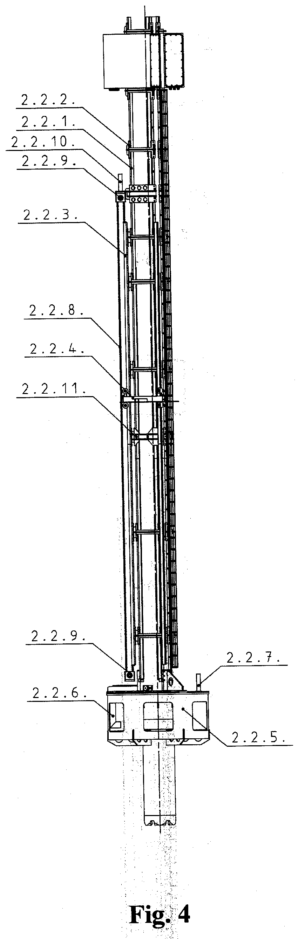

Fig. 4 presents a view of the inspection block of the inspection column of the embodiment of the invention from Fig. 1;
Fig. 5 presents a view of the fuel assembly gripping means that forms a part of the inspection column of the embodiment of the invention shown in Fig. 1;
Fig. 6 presents a view of the travelling positioning device that forms a part of the embodiment of the invention shown in Fig. 1 in a top view;
Fig. 7 presents a view of the travelling positioning device that forms a part of the embodiment of the invention shown in Fig. 1 in a front view.

### Embodiments of the invention

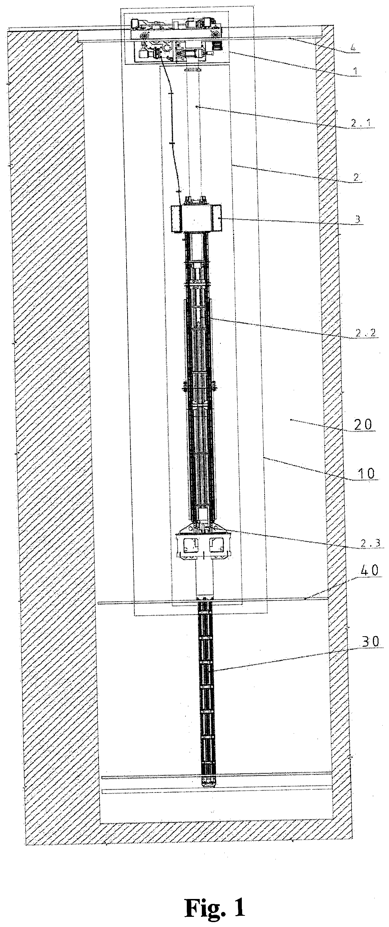

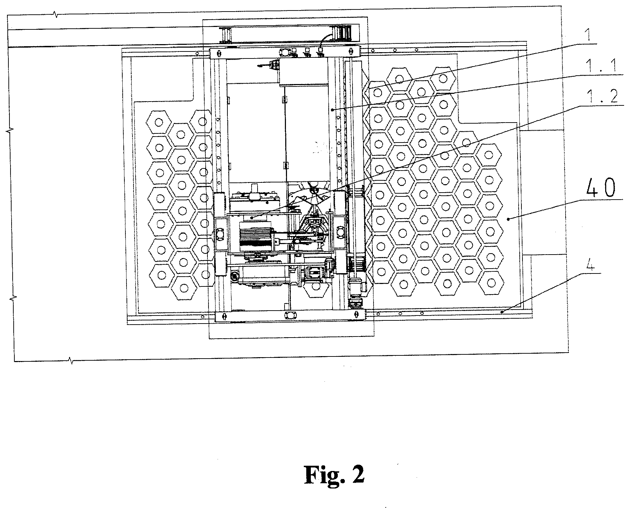

The fuel assembly inspection device according to this invention will be understood easier by means of an the embodiments described below. However, it is obvious that these embodiments serve for understanding and illustration of the invention only and should not be construed to restrict the invention to the described embodiments only. Fig. 1 and 2 introduce one embodiment of the fuel assembly inspection device 10 according to this invention, which is arranged predominantly in a fuel pool 20 of a nuclear power plant. The embodiment of the fuel assembly inspection device 10 according to this invention shown in Fig. 1 and 2 comprises a travelling positioning device 1 and an inspection column 2 with a gripping means 2.3 to grip the fuel assembly 30, and is also equipped with at least an electrical outfit 3 necessary to perform the required tasks but not described here for simplification. The travelling positioning device 1 is arranged in a movable way on the fuel pool 20 and is adapted for connection with the inspection column 2; this travelling positioning device 1 is adapted and arranged for movement within the fuel pool 20 with fuel assemblies 30 and for setting the inspection column 2 in position above the fuel assembly 30 to be inspected. To the inspection column 2, the gripping means 2.3 is attached, adapted to grip the fuel assembly 30 and to handle it to make the required inspection measurements.

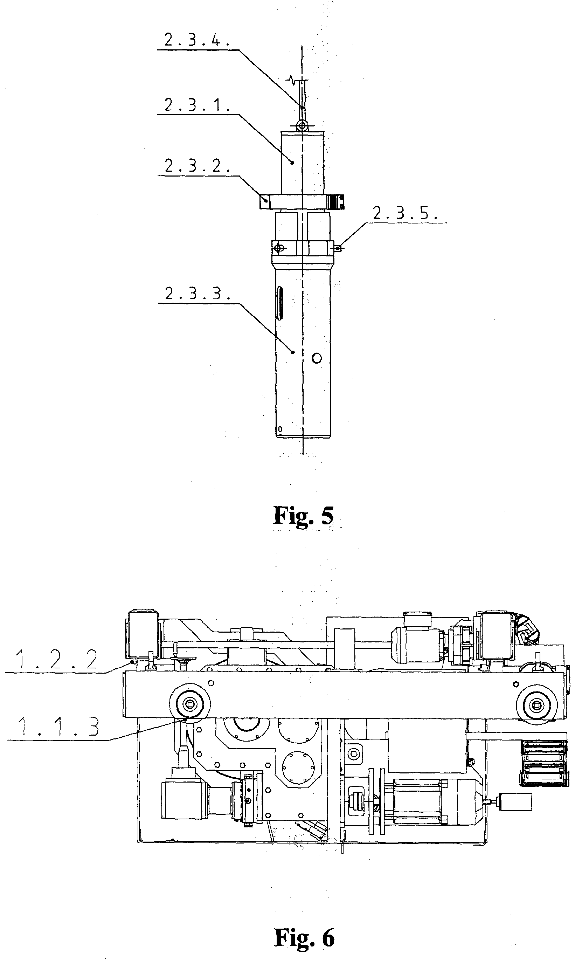

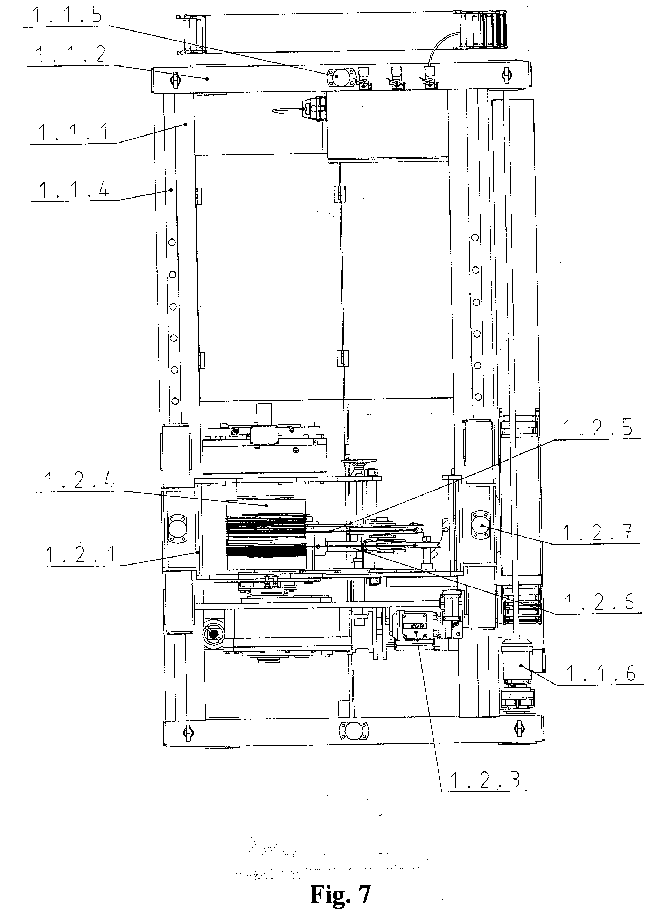

The embodiment of the fuel assembly inspection device 10 according to the present invention comprises a travelling positioning device 1 adapted to set the inspection column 2 in a position above the fuel assembly 30 to be inspected. According to the embodiment shown in Fig. 6 and 7, the travelling positioning device 1 is adapted preferably to move the inspection column 2 within the fuel pool 20; however, it is also assumed that the travelling positioning device 1 may be arranged around the circular fuel pool 20 along a circular path. In the embodiment shown, the travelling positioning device 1 is arranged on the guide rails 4 of the longitudinal travel constructed along the opposite sides of the fuel pool 20.

In the embodiment, the travelling positioning device 1 is adapted preferably as a primary travelling frame 1.1 constructed, for instance, from two I-sections 1.1.1 interconnected by travelling connecting beams 1.1.2, and thus constructed primary travelling frame 1.1 is provided with travelling wheels 1.1.3 adapted to traverse along the longitudinal travel rail 4; in the present embodiment, the primary travelling frame 1.1 is fitted with four travelling wheels 1.1.3 but the number of the wheels can be different to facilitate reliable traverse of the primary travelling frame 1.1 along the rails. The longitudinal travel rails 4 are installed on the fuel pool 20 cover shoulder, preferably above the fuel pool 20 water surface, and are preferably mounted permanently so that they need not be dismantled when dismantling the fuel assembly 30 inspection device. Cross travel rails 1.1.4 are constructed on the top of the primary travelling frame 1.1 and connected with it to facilitate the cross traverse of the column catch 1.2. The primary travelling frame 1.1 is equipped with a drive 1.1.6 to move it along the longitudinal travel rails 1 by means of travelling wheels 1.1.3.

A movable column catch 1.2 is installed on the cross travel rails 1.1.4 of the travelling positioning device 1 to facilitate inspection column 2 movement in the transverse direction to the movement of the whole travelling positioning device 1 along the longitudinal travel rails 4. For the purposes of this application, the term transverse movement of the inspection column 2 in the column catch 1.2 means the movement of the column catch 1.2 with the inspection column 2 in such a direction which makes it possible together with the movement of the primary travelling frame 1.1 of the travelling positioning device 1 along the longitudinal travel rails 1 to place the inspection column 2 in the selected position of the fuel assembly 30 in the fuel pool 20. The column catch 1.2 is adapted, for instance, as a secondary travelling frame 1.2.1 equipped with travelling wheels 1.2.2 adapted and arranged to travel along the cross travel rails 1.1.4. The column catch 1.2 is fitted with a drive 1.2.3 connected to the travelling wheels 1.2.3 to ensure column catch 1.2 travel. According to the the-embodiment shown, the column catch 1.2 is provided with a lifting device to control the gripping means 2.3 of the inspection column 2 to grip the selected fuel assembly 30 to be inspected by means of the device according to the present invention. This lifting device is adapted preferably of a rope winch 1.2.4 with at least one rope or chain or a similar element making it possible to lift or lower the gripping means 2.3 by winding the rope or chain, whereby facilitating the handling of the gripping means 2.3 in a space relatively restricted in height above the coolant surface in the fuel pool 20. This embodiment is especially advantageous in an arrangement where a refuelling machine is constructed above the pool to enable the concurrence of works of both the refuelling machine and of the device to the present invention. In the embodiment, the lifting device includes preferably a rope winch 1.2.4 with a carrying rope 1.2.5 to lift the gripped fuel assembly 30 and a control rope 1.2.6 designed to control the locking/unlocking of the gripping means 2.3 when gripping the fuel assembly 30 to handle it in a safe manner during inspection and to release the fuel assembly 30 from the gripping means 2.3 after being re-inserted into the storage rack 40 in the fuel pool 20.

Especially preferably it is possible to lock the travelling positioning device 1 in precisely defined positions on the longitudinal and cross travel rails, such as on the rails 4 and 1.1.4 in the given embodiment, by means of single-acting locks 1.1.5 and 1.2.7 controlled for instance by means of a pneumatic or an electromagnetic system, etc., while this locking is achieved preferably by means of latches sliding out of the locks 1.1.5 and 1.2.7 and entering suitably designed counter-holes created for instance in the rails 4 and 1.1.4 or near them. Such counter-holes are arranged especially preferably according to the spacing of the fuel assemblies 30 located in the storage rack 40 so as to secure the inspection column 2 in the fuel pool 20 always in a position precisely above the selected fuel assembly 30 to be inspected.

According to this invention, the inspection column 2 is designed to inspect the fuel assembly 30, containing mainly the means of visual and dimensional check of the fuel assembly 30. During the inspection, the fuel assembly 30 is pulled into the inspection column 2 to be virtually surrounded by it. The term visual check means mainly the visual check of the surface of the fuel assembly 30 and a check for the presence of foreign objects in the fuel assembly 30, while the term dimensional check means measurement of at least one of the following parameters of the fuel assembly 30: its length, torsion and deflection. The inspection column 2 of the fuel assembly 30 inspection device 10 according to the present invention comprises in its embodiment shown in Fig. 1 a fixed part 2.1, a movable inspection block 2.2 and a movable gripping means 2.3 inside. The fixed part 2.1 of the inspection column 2 is used to fasten the inspection column 2 in the column catch 12 of the travelling positioning device 1 and facilitates preferably the guiding of the inspection block 2.2 when being lowered to the fuel assembly 30. The inspection block 2.2 serves as a carrier of the fuel assembly 30 inspection means, especially the above-mentioned visual and dimensional check means for the fuel assembly 30, and forms preferably a guide for the movement of the gripping means 2.3. The gripping means 2.3 is used to grip the fuel assembly 30 by the device according to this invention to handle the fuel assembly 30 safety during its inspection conducted in the inspection column 2 of the device according to this invention and to release the fuel assembly 30 subsequently from the device according to this invention after being relocated in the storage rack 40 of the fuel pool 20. A more detailed description of the gripping means 2.3 is provided below.

As already mentioned above, the fixed part 2.1 of the inspection column 2 of the embodiment is used to attach the inspection column 2 to the travelling positioning device 1, while its upper part is attached to the column catch 1.2 of the travelling positioning device 1 to handle the inspection column 2 during the inspection of the fuel assemblies 30. The fixed part 2.1 of the inspection column 2 in this embodiment comprises a flange 2.1.1 for connection with the column catch 12, a vertical part 2.1.2 and sliding elements 2.1.3 facilitating the guiding of the inspection block 2.2 when lowering it into the fixed part 2.1 of the inspection column 2. As already mentioned above, the fixed part 2.1 is preferably of a hollow design, with both ropes 1.2.5 and 1.2.6 used to handle the gripping means 2.3 being routed through the hollow as the embodiment. The inspection block 2.2 of the inspection column 2 is arranged on the fixed part 2.1 movably as against the fixed part 2_1 in the vertical direction, i.e. the direction of lifting/lowering the fuel assembly 30 by the gripping means 2.3, while being guided over the sliding elements 2.3.2. In the embodiment, both ropes 1.2.5 and 1.2.6 are further routed through the internal part of the inspection block 2.2.

According to the invention, the term inspection block 2.2 means that part of the device which comprises the entire instrumentation needed to inspect the fuel assembly 30. In the sense of this application, the term instrumentation means especially the sensors used to inspect the fuel assembly 30 and the cameras for visual check of the fuel assembly 30 surface. As already mentioned above, the embodiment of the device according to the present invention is designed to inspect a hexagonal fuel assembly 30 and the inspection block 2.2 in this embodiment is designed preferably as a self-supporting skeleton consisting of three vertical section elements forming at the same time the internal slideways 2.2.1, while these vertical section elements are interconnected by means of cross beams 2.2.2. In the illustrated embodiment, the inspection block 2.2 is equipped with internal slideways 2.2.1 to guide the gripping means 2.3 as against the inspection block 2.2, while the internal slideways 2.2.1 are preferably used also to guide the inspection block as against the fixed part 2.1. In the illustrated embodiment, the internal slideways 2.2.1 are in the number of three, being moved by 120°. In the illustrated embodiment, the inspection block 2.2 is equipped with external slideways 2.2.3 to guide the movable ring 2.2.4 used to carry sensors; see below. At the bottom, the inspection block 2.2 is fitted with a camera block 2.2.5 firmly attached as in the illustrated embodiment to the vertical section elements. The camera block 2.2.5 as a part of the inspection block 2.2 is designed to be slid on to the fuel assembly 30 to be inspected and to be seated reliably onto the storage rack 40; in the illustrated embodiment, it is provided with an extended part with cameras 2.2.6 which ensures a sufficient distance of the cameras 2.2.6 from the scanned surface of the fuel assembly 30, while this extended part of the embodiment is arranged preferably above the top of the fuel assemblies 30, i.e. at a distance from the storage rack 40 so that no undesirable collisions of the extended part of the camera block 2.2.5 with the adjacent fuel assemblies 30 can occur upon the seating of the inspection block 2.2. The group of the cameras 2.2.6 for visual inspection of the fuel assembly 30 is arranged rotationally inside the camera block 2.2.5, and the camera block 2.2.5 is further equipped with a drive 2.2.7 to turn the cameras 2.2.6 as against the fuel assembly 30 being inspected to facilitate scanning all sides of the subject fuel assembly 30 gradually. As in the embodiment, the device is designed to inspect hexagonal fuel assemblies 30 and the group of the cameras 2.2.6 comprises preferably three cameras arranged to scan three walls of the fuel assembly 30. The turning of the cameras 2.2.6 makes it possible to scan the surface of one half of the walls of the fuel assembly 30 when pulling the fuel assembly 30 into the inspection column 2, while the other half of the walls of the fuel assembly 30 will be scanned when lowering the fuel assembly 30 back into the storage rack 40 in the fuel pool 20 after turning the cameras 2.2.6 by the relevant angle. It is naturally possible to have a different number of the cameras 2.2.6, e.g., one or two. It is also possible to have the number of cameras 2.2.6 corresponding to the number of the sides, while in such embodiment it would not be necessary to turn the cameras 2.2.6 so that the camera block 2.2.5 would not include any camera drive 2.2.7 nor the cameras 2.2.6 would have to be arranged rotationally. However, the reduction of the number of the cameras 2.2.6 reduces preferably the cost of their replacement as the service life of the cameras 2.2.6 in the radioactive environment is limited and the cameras 2.2.6 are expensive instruments. The illustrated embodiment, however, facilitates utilizing rationally both movements needed to pull the fuel assembly 30 being inspected into the inspection column 2 and to return it back into the storage rack 40 to scan all the walls of the fuel assembly 30, while on the other hand it reduces the number of the cameras 2.2.6 to the necessary minimum which, however, does not require making any unnecessary movements with the fuel assembly 30. At its bottom, the camera block 2.2.5 is designed for attachment to the selected fuel assembly 30 so that the fuel assembly 30 can be pulled through the inside of the camera block 2.2.5 into the inspection block 2.2 to make the inspection and is further designed to ensure supporting the whole inspection block 2.2 on the storage rack 40 in the fuel pool 20 or its upper part from which the fuel assemblies 30 are pulled out.

For the purposes of this application, the term storage rack 40 means the equipment located in the fuel pool 20 and used to store fuel assemblies 30 in the fuel pool 20 safely.

In the embodiment, the inspection block 2.2 is equipped with at least one contact sensor arranged preferably so that, after pulling the camera block 2.2.5 of the inspection column 2 over the fuel assembly 30 to be checked and after the camera block 2.2.5 is seated on the storage rack 40, it leans against the top of the neighbouring fuel assembly 30 measured in length. It means that fuel assembly length is measured in the given the-embodiment in other fuel assembly than that pulled into the inspection column 2 for making a visual, torsion and deflection check. According to another embodiment, the inspection block 2.2 can be provided with several contact sensors to make it possible to measure length simultaneously in several fuel assemblies 30 adjacent to the fuel assembly 30 being pulled into the inspection column 2. The contact sensor will measure the length of the part of the fuel assembly protruding above the storage rack 40 as further described below.

The inspection block 2.2 is equipped with at least one measuring probe designed to measure torsion and deflection of the fuel assembly where the measurement is conducted by measuring the distance of the measuring probe from the surface of the fuel assembly in one plane transversal to the longitudinal axis of the fuel assembly, and this measurement is carried out at several levels of the fuel assembly height to establish its torsion or deflection. The measuring probe can be of a contract or contactless design. Possible measuring probes to be used in the embodiment of the invention will be described below.

In the embodiment, the inspection block 2.2 is equipped with three measuring probes arranged in one plane to check the fuel assembly 30 for torsion and deflection by measuring the distance of the surface of the fuel assembly 30 from the probe. In the embodiment, the three probes are attached by approximately 120° on the movable ring 2.2.4 which moves during the measurement vertically along the fuel assembly 30 being checked on the external slideways 2.2.3 so as to make the inspection at several levels over the height of the fuel assembly 30. This continuous method of fuel assembly torsion or deflection measurement with the movable ring 2.2.4 with probes moving along the fuel assembly 30 makes it possible to reduce the number of the measuring probes substantially when obtaining continuous measurement results from the whole length of the fuel assembly 30 being inspected. In the embodiment, the movement of the ring 2.2.4 is provided preferably by means of a roller chain 2.2.8 routed between chain wheels 2.2.9 in the lower and upper parts of the inspection block 2.2. The traverse of the movable ring 2.2.4 along the external slideways 2.2.3 is provided by the drive 2.2.10 controlling the movement of the roller chain 2.2.8. Another embodiment is also possible, however, containing other number of probes, for instance four or more, with the number of the probes depending predominantly on the requirements for the conducted measurement of the fuel assembly 30. The installation of the measuring probes on the movable ring 2.2.4 will make it possible to measure the fuel assembly 30 for torsion or deflection easily along its whole height without having to manipulate the fuel assembly 30 during measurement.

For lowering and lifting the inspection block 2.2 along the fixed part 2.1 of the inspection column 2, the inspection block 2.2 is provided with reinforced cross beams 2.2.11 designed to catch the claw 2.3.5 of the gripping means 2.3 when lifting or lowering the inspection block 2.2 to the fuel assembly 30 to be inspected.

The gripping means 2.3 is intended to grip the fuel assembly 30 reliably and, in the given embodiment, it is designed preferably as a hollow cylindrical body 2.3.1 to move in the inspection block 2.2, which movement may be provided, for instance, by means of sliding elements 2.3.2 with which the gripping means 2.3 is provided in the internal slideways 2.2.1 of the inspection block 2-2. However, it is also possible to design another embodiment facilitating the required movement of the gripping means 2.3 as against the inspection block 2.2 to make sure that the gripping means 2.3 does not turn inadvertently and that the axial alignment of the gripping means 2.3 as against the inspection block 2.2 is kept to guide the gripping means 2-3 safely and reliably to the fuel assembly 30 with which it has to be connected. The hollow body 2.3.1 is fitted with a movably positioned lockable ring 2.3.3 connected to the control rope 1.2.6 and in the upper part attached to a supporting rod 2.3.4. In its upper part, the supporting rod 2.3.4 is designed for connection with the carrying rope 1.2.5 of the lifting device, whereby connecting the carrying rope 1.2.5 with the gripping means 2.3. The control rope 1.2.6 is routed in parallel with the supporting rod 2.3.4. The control rope 1.2.6 is connected to the locking ring 2.3.3 of the lock of the gripping means 2.3 to secure/release the fuel assembly 30 being inspected after gripping it with the gripping means 2.3 and to pull the fuel assembly 30 into the inspection block 2-2. The pull of the control rope 1.2.6 turns the locking ring 2.3.3 to lock the fuel assembly 30 onto which the gripping means2.3 was lowered previously. A claw 2.3.5 is firmly attached to the locking ring 2.3.3. With the gripping means2.3 being locked, i.e. when holding the fuel assembly 30, this claw 2.3.5 can pass freely through the whole inspection block 2.2. With the gripping means2.3 being unlocked and lifted, the claw 2.3.5 will lean against the reinforced cross beam 2.2.11 of the inspection block 2.2 to lift the whole inspection block 2.2. The described design of the gripping means2.3 and of its lifting process only serves as an example of its advantageous design. Therefore, other designs of the gripping means2.3, of the manner of securing the fuel assembly 30 and also of lifting the gripping means2.3 with the fuel assembly 30 than that described above are possible.

### Fuel assembly inspection method

### Visual check:

The visual check is conducted with the cameras 2.2.6 arranged in the camera block 2.2.5 so that by turning them by 60° the visual check of all six walls of the fuel assembly 30 can be made when pulling the fuel assembly 30 into the inspection block 2.2 and back into the storage rack 40 (to save the number of the cameras 2.2.6 subject to radioactive radiation).
- The length of the fuel assembly 30 is measured preferably by means of a contact sensor arranged on the camera block 2.2.5 so that when the inspection block 2.3 seats down on the storage rack 40 this contact sensor leans against the top of the fuel assembly 30 to measure the height of the fuel assembly 30 from the upper edge of the storage rack 40, and as the height of this edge of the storage rack 40 from the contact surface of the fuel assembly 30 in the given place is known, the whole length of the fuel assembly 30 will be calculated by adding up the values.
- The torsion and deflection values of the fuel assembly 30 can be checked preferably using the device according to the invention in the following two ways:
   1. Using ultrasonic probes, where the measurement is done for instance with at least three probes located in positions against each other, e.g. preferably by 120°, with every probe sending a signal and receiving it after returning from the wall of the fuel assembly 30. This process will establish the distance of the probe from the wall of the fuel assembly 30, while with the cross section of the fuel assembly 30 being known (a hexagon in this example), it is possible to use the measured distances to determine the position of the fuel assembly 30 against the probes on the ring 2.2.4. By shifting the movable ring 2.2.4 with the probes along the fuel assembly 30, these values will be obtained for several positions of the ring 2.2.4 with the probes towards the fuel assembly 30, with the measurements being made at different heights of the fuel assembly 30. After comparing the values measured by the probes, it is then possible to determine the deflection and torsion values of the fuel assembly 30. If the movable ring 2.2.4 is in the upper position, the probes can be calibrated if required between the individual measurements.
   2. Using LVDT probes, which are transformers used to measure linear displacement (linear variable differential transformer), where the measurement is done again with at least three probes located in positions against each other, e.g. preferably by 120°, at the level of every lattice of the fuel assembly 30. During measurement, the probes are pressed towards the lattices by means of pneumatic cylinders.
      There are also other methods of fuel assembly torsion and deflection measurement, using different numbers or arrangements of the measuring probes to measure the required parameters to evaluate the torsion or deflection of the fuel assembly.

### Procedure of assembly of the device according to the invention and of fuel assembly inspection and description of the measurement method

Before starting the inspection of the fuel assembly 30 by means of the device according to the present invention, the device must be installed in the fuel pool 20 area. In the first phase, the individual assembly units are unpacked from the transport containers and the electronic equipment is commissioned. Further, the travelling positioning device 1 is installed by means of a crane on the longitudinal travel rails 1 along the fuel pool 20. After connecting and activating the controls, the travelling positioning device 1 will move into the defined assembly position of the inspection column 2 and will be locked on the longitudinal travel rails 1 to prevent displacement during assembly. After that, the inspection column 2 is placed in the prepared column catch 1.2 set in the assembly position. The inspection column 2 is secured towards the travelling positioning device 1 by means a bayonet lock and binding screws, for instance. Then the supporting rods 2.3.4 of the gripping means2.3 and the lifting device ropes 1.2.5 and 1.2.6 are connected. The inspection process of the fuel assembly 30 can be started after unlocking the supporting rods 2.3.4.

After being travelled to and locked above the required fuel assembly 30, the inspection block 2.2 is lowered down to the upper plate of the storage rack 40 and seated on it. Then, the fuel assembly 30 being inspected is pulled from the cell of the storage rack 40 into the inspection block 2.2 by means of the gripping means2.3. Both operations are performed by means of the rope winch 1.2.4 which is a part of the travelling positioning device 1. When being lifted and lowered, the fuel assembly 30 is secured in the catch 2.3 against release and uncontrollable fall. The above-described checks are carried out during and after pulling the fuel assembly 30 into the inspection block 2.2.

The design solution of the inspection column 2 makes it possible to reduce its total length considerably for transport outside the fuel pool 20.

All the above-mentioned examples of embodiment and the equipment parts or structural elements described therein only point out to an advantageous embodiment of the invention and only serve to explain the embodiment of the invention; they are definitely not intended to be limited to the subject embodiment, unless stated expressly otherwise. Furthermore, it is assumed that the device according to the invention as defined in the patent claims attached, especially its inspection block, can be equipped with other inspection modules or modules for performing other checks, such as to identify leaking fuel clusters, etc. With such modifications, the device will still fall within the scope of the invention substantiated by the patent claims attached, for the term "comprise" is used here to specify the presence of the functions, integers, steps, operations, elements and/or components but does not exclude the present or addition of one or more other functions, integers, steps, operations, elements, components and/or groups thereof.

### Industrial applicability

The practical application of the proposed solution is intended especially for inspection of spent fuel assemblies in nuclear reactors.

### List of reference numerals

10 Inspection device
20 Fuel pool
30 Fuel assembly
40 Storage rack

1. Travelling positioning device
   1.1. Primary travelling frame
      1.1.1. I-section
      1.1.2. Travelling connecting beam
      1.1.3. Travelling wheel
      1.1.4. Cross travel rails
      1.1.5. Single-acting lock
      1.1.6. Drive
   1.2. Column catch
      1.2.1. Secondary travelling frame
      1.2.2. Travelling wheel
      1.2.3. Drive
      1.2.4. Rope winch
      1.2.5. Carrying rope
      1.2.6. Control rope
      1.2.7. Single-acting lock
2. Inspection column
   2.1. Fixed part
      2.1.1. Flange
      2.1.2. Vertical part
      2.1.3. Sliding elements
   2.2. Inspection block
      2.2.1. Internal slideway
      2.2.2. Cross beam
      2.2.3. External slideway
      2.2.4. Movable ring
      2.2.5. Camera block
      2.2.6. Camera
      2.2.7. Drive
      2.2.8. Roller chain
      2.2.9. Chain wheel
      2.2.10. Drive
      2.2.11. Reinforced cross beam
   2.3. Grip
      2.3.1. Body
      2.3.2. Sliding element
      2.3.3. Locking ring
      2.3.4. Supporting rod
      2.3.5. Claw
3. Electrical outfit
4. Longitudinal travel rail

## Claims

1. Inspection device (10) for nuclear fuel assemblies (30) arranged in a storage rack (40) of a fuel pool (20), the inspection device (10) comprising:
- inspection means with at least one camera (2.2.6) for scanning a surface of the fuel assembly (30),
- an inspection column (2) provided for carrying out an extension movement into the fuel pool (20), the inspection column (2) being provided at one end with a connecting means;
- a travelling positioning device (1) provided for mutual connection with the inspection column (2) by the connecting means, said travelling positioning device (1) being further provided for changing a position of the inspection column (2) in the fuel pool (20) above the nuclear fuel assembly (30) to be inspected; the inspection column (2) is equipped with a gripping means (2.3) movably arranged and provided for capturing the fuel assembly (30), wherein said gripping means (2.3) being arranged movably in the inspection column (2) and being provided for lifting the fuel assembly (30) from the storage rack (40) of the fuel pool (20) and for pulling the said fuel assembly (30) into the inspection column (2), the inspection column (2) further comprises a fixed part (2.1) connectible with the travelling positioning device (1) by the connecting means, and an inspection block (2.2),
**characterized in that**
the inspection block (2.2) is slidably arranged against the fixed part (2.1), wherein said inspection block (2.2) is arrangeable to at least partially surround the fuel assembly (30) being inspected and the gripping means (2.3) are arranged concentrically in the inspection block (2.2) for an independent movement against it, wherein said inspection block (2.2) is further provided with at least one measuring probe arranged for measuring a deflection and a torsion of the fuel assembly in several height levels, wherein the inspection block (2.2) is provided in its lower part with a camera block (2.2.5) with the at least one camera (2.2.6) for checking the surface of the fuel assembly (30).

2. Inspection device (10) according to claim 1, **characterized in that** the at least one camera (2.2.6) is pivotably arranged in the camera block (2.2.5) being provided with a drive (2.2.7) to turn said at least one camera.

3. Inspection device (10) according to claim 2, **characterized in that** the number of the cameras (2.2.6) in the camera block (2.2.5) is 1 or 2 or 3 and the cameras (2.2.6) are arranged for turning by means of the drive (2.2.7) into different positions for facilitating scanning of all sides of the subject fuel assembly (30).

4. Inspection device (10) according to claim 3, **characterized in that** the number of the cameras (2.2.6) in the camera block (2.2.5) is 2 or 3.

5. Inspection device (10) according to any of claims 1 to 4, **characterized in that** the inspection block (2.2) is fitted with three slideways (2.2.1) turned by 120° angles in the cross-section and attached to each other by means of cross beams (2.2.2), said slideways (2.2.1) being provided with a movable ring (2.2.4) arranged to move along them, said movable ring (2.2.4) is provided with said at least one measuring probe.

6. Inspection device (10) according to Claim 5, **characterized in that** there are three measuring probes on the movable ring (2.2.4), the three measuring probes being arranged by 120° angles from each other in one plane for measuring a deflection and a torsion of the fuel assembly (30) to be inspected.

7. Inspection device according to any of claims 1 to 6, **characterized in that** the gripping means (2.3) is arranged for lowering and lifting the inspection block (2.2).

8. Method of inspection of fuel assemblies (30) arranged in a storage rack (40) in a fuel pool (20) by using an inspection device (10) according to claim 1, during which a condition of the fuel assemblies (30) is checked,
wherein a travelling positioning device (1) with inspection means is installed in the fuel pool in which the inspection is to be performed first,
then the inspection device (10) is set into a pre-defined position of the fuel assembly (30) to be inspected,
in said position the inspection block is lowered to the storage rack (40) and grips the fuel assembly (30) in said position,
the fuel assembly (30) is lifted from the storage rack (40) to at least a height needed to conduct the inspection,
the fuel assembly (30) is stabilized for measuring the geometric parameters of the fuel assembly (30),
at least the required geometric parameters of the fuel assembly (30) are measured in the said stabilized position of the fuel assembly (30) by at least one measuring probe and, the fuel assembly (30) is inserted back into the storage rack (40) after said measurement is finished,
wherein cameras (2.2.6) perform a visual check of the first half of the surface of the fuel assembly (30) during the lifting of the fuel assembly (30) from the storage rack (40), than the cameras (2.2.6) are turned by a respective angle to allow a visual check of the second half of the surface of the inspected fuel assembly (30), and the cameras perform the visual check of the second half of the surface of the inspected fuel assembly (30) during the insertion movement of the inspected fuel assembly (30) into the storage rack (40).

## Patentansprüche

1. Inspektionsvorrichtung (10) für Kernbrennstoffanordnungen (30), die in einem Lagergestell (40) eines Brennstoffbeckens (20) angeordnet sind, wobei die Inspektionsvorrichtung (10) Inspektionsmittel mit mindestens einer Kamera (2.2.6) zum Abtasten einer Oberfläche der Brennstoffanordnung (30) umfasst,
- wobei eine Inspektionssäule (2) zum Ausführen einer Ausfahrbewegung in das Brennstoffbecken (20) vorgesehen ist, wobei die Inspektionssäule (2) an einem Ende mit einem Verbindungsmittel versehen ist;
- eine bewegliche Positionierungsvorrichtung (1) zur gemeinsamen Verbindung mit der Inspektionssäule (2) durch das Verbindungsmittel vorgesehen ist, wobei die bewegliche Positionierungsvorrichtung (1) ferner zum Ändern einer Position der Inspektionssäule (2) im Brennstoffbecken (20) über der zu inspizierenden Kernbrennstoffanordnung (30) vorgesehen ist; wobei die Inspektionssäule (2) mit einem Greifmittel (2.3) ausgestattet ist, das beweglich angeordnet und zum Erfassen der Brennstoffanordnung (30) vorgesehen ist, wobei das Greifmittel (2.3) beweglich in der Inspektionssäule (2) angeordnet ist und zum Heben der Brennstoffanordnung (30) aus dem Lagergestell (40) des Brennstoffbeckens (20) und zum Ziehen der Brennstoffanordnung (30) in die Inspektionssäule (2) vorgesehen ist, wobei die Inspektionssäule (2) ferner einen fixierten Teil (2.1), der durch das Verbindungsmittel mit der beweglichen Positionierungsvorrichtung (1) verbunden werden kann, und einen Inspektionsblock (2.2) umfasst, **dadurch gekennzeichnet, dass** der Inspektionsblock (2.2) gleitend am fixierten Teil (2.1) angeordnet ist, wobei der Inspektionsblock (2.2) angeordnet werden kann, sodass er die Brennstoffanordnung (30), die inspiziert wird, zumindest teilweise umgibt, und die Greifmittel (2.3) sind konzentrisch im Inspektionsblock (2.2) für eine unabhängige Bewegung diesem gegenüber angeordnet sind, wobei der Inspektionsblock (2.2) ferner mit mindestens einer Messsonde versehen ist, die zum Messen einer Biegung und einer Torsion der Brennstoffanordnung auf mehreren Höhenstufen angeordnet ist, wobei der Inspektionsblock (2.2) an seinem unteren Teil mit einem Kamerablock (2.2.5) versehen ist, wobei die mindestens eine Kamera (2.2.6) zum Prüfen der Oberfläche der Brennstoffanordnung (30) dient.

2. Inspektionsvorrichtung (10) nach Anspruch 1, **dadurch gekennzeichnet, dass** die mindestens eine Kamera (2.2.6) schwenkbar im Kamerablock (2.2.5) angeordnet ist, der mit einem Antrieb (2.2.7) versehen ist, um die mindestens eine Kamera zu drehen.

3. Inspektionsvorrichtung (10) nach Anspruch 2, **dadurch gekennzeichnet, dass** die Anzahl der Kameras (2.2.6) im Kamerablock (2.2.5) 1 oder 2 oder 3 beträgt und die Kameras (2.2.6) zum Drehen mithilfe des Antriebs (2.2.7) an unterschiedliche Positionen zum Ermöglichen einer Abtastung aller Seiten der gegenständlichen Brennstoffanordnung (30) angeordnet sind.

4. Inspektionsvorrichtung (10) nach Anspruch 3, **dadurch gekennzeichnet, dass** die Anzahl der Kameras (2.2.6) im Kamerablock (2.2.5) 2 oder 3 beträgt.

5. Inspektionsvorrichtung (10) nach einem der Ansprüche 1 bis 4, **dadurch gekennzeichnet, dass** der Inspektionsblock (2.2) mit drei Führungsbahnen (2.2.1) ausgestattet ist, die um 120°-Winkel im Querschnitt gedreht sind und mithilfe von Querbalken (2.2.2) aneinander befestigt sind, wobei die Führungsbahnen (2.2.1) mit einem beweglichen Ring (2.2.4) versehen sind, der angeordnet ist, sich an den Bahnen entlang zu bewegen, wobei der bewegliche Ring (2.2.4) mit der mindestens einen Messsonde versehen ist.

6. Inspektionsvorrichtung (10) nach Anspruch 5, **dadurch gekennzeichnet, dass** es drei Messsonden am beweglichen Ring (2.2.4) gibt, wobei die drei Messsonden in 120°-Winkeln voneinander in einer Ebene zum Messen einer Biegung und einer Torsion der zu inspizierenden Brennstoffanordnung (30) angeordnet sind.

7. Inspektionsvorrichtung nach einem der Ansprüche 1 bis 6, **dadurch gekennzeichnet, dass** das Greifmittel (2.3) zum Senken und Heben des Inspektionsblocks (2.2) angeordnet ist.

8. Inspektionsverfahren von Brennstoffanordnungen (30), die in einem Lagergestell (40) in einem Brennstoffbecken (20) angeordnet sind, unter Verwendung der Inspektionsvorrichtung (10) nach Anspruch 1, während dessen ein Zustand der Brennstoffanordnungen (30) geprüft wird,
wobei eine bewegliche Positionierungsvorrichtung (1) mit einem Inspektionsmittel im Brennstoffbecken installiert ist, in dem die Inspektion zuerst durchzuführen ist, danach die Inspektionsvorrichtung (10) an eine vordefinierte Position der zu inspizierenden Brennstoffanordnung (30) gesetzt wird,
in dieser Position der Inspektionsblock zum Lagergestell (40) abgesenkt wird und die Brennstoffanordnung (30) in der Position ergreift,
die Brennstoffanordnung (30) aus dem Lagergestell (40) auf mindestens eine Höhe gehoben wird, die notwendig ist, um die Inspektion durchzuführen,
die Brennstoffanordnung (30) zum Messen der geometrischen Parameter der Brennstoffanordnung (30) stabilisiert wird,
mindestes die erforderlichen geometrischen Parameter der Brennstoffanordnung (30) in der stabilisierten Position der Brennstoffanordnung (30) durch mindestens eine Messsonde gemessen werden und
die Brennstoffanordnung (30) zurück in das Lagergestell (40) eingesetzt wird, nachdem die Messung abgeschlossen ist,
wobei Kameras (2.2.6) eine visuelle Prüfung der ersten Hälfte der Oberfläche der Brennstoffanordnung (30) während des Hebens der Brennstoffanordnung (30) aus dem Lagergestell (40) durchführen, dann die Kameras (2.2.6) um einen jeweiligen Winkel gedreht werden, um eine visuelle Prüfung der zweiten Hälfte der Oberfläche der inspizierten Brennstoffanordnung (30) zu ermöglichen, und die Kameras die visuelle Prüfung der zweiten Hälfte der Oberfläche der inspizierten Brennstoffanordnung (30) während der Einsetzbewegung der inspizierten Brennstoffanordnung (30) in das Lagergestell (40) durchführen.

## Revendications

1. Dispositif d'inspection (10) pour des assemblages combustibles nucléaires (30) disposés dans un panier de stockage (40) d'une piscine à combustible (20), le dispositif d'inspection (10) comprenant des moyens d'inspection avec au moins une caméra (2.2.6) pour balayer une surface de l'assemblage combustible (30),
- une colonne d'inspection (2) prévue pour réaliser un mouvement d'extension dans la piscine à combustible (20), la colonne d'inspection (2) étant munie, à une extrémité, d'un moyen de liaison ;
- un dispositif de positionnement mobile (1) prévu pour une liaison mutuelle avec la colonne d'inspection (2) par les moyens de liaison, ledit dispositif de positionnement mobile (1) étant en outre prévu pour changer une position de la colonne d'inspection (2) dans la piscine à combustible (20) au-dessus de l'assemblage combustible nucléaire (30) à inspecter ; la colonne d'inspection (2) est équipée d'un moyen de préhension (2.3) disposé de manière mobile et prévu pour saisir l'assemblage combustible (30), ledit moyen de préhension (2.3) étant disposé de manière mobile dans la colonne d'inspection (2) et étant prévu pour lever l'assemblage combustible (30) à partir du panier de stockage (40) de la piscine à combustible (20) et pour tirer ledit assemblage combustible (30) jusque dans la colonne d'inspection (2), la colonne d'inspection (2) comprenant en outre une partie fixe (2.1) apte à être reliée au dispositif de positionnement mobile (1) par les moyens de liaison, et un bloc d'inspection (2.2), **caractérisé par le fait que** le bloc d'inspection (2.2) est disposé de manière coulissante contre la partie fixe (2.1), ledit bloc d'inspection (2.2) étant apte à être disposé pour entourer au moins partiellement l'assemblage combustible (30) en cours d'inspection et les moyens de préhension (2.3) étant disposés de manière concentrique dans le bloc d'inspection (2.2) pour un mouvement indépendant contre celui-ci, ledit bloc d'inspection (2.2) étant en outre muni d'au moins une sonde de mesure disposée pour mesurer une flèche et une torsion de l'assemblage combustible à plusieurs niveaux de hauteur, le bloc d'inspection (2.2) étant muni, dans sa partie inférieure, d'un bloc de caméra (2.2.5) avec l'au moins une caméra (2.2.6) pour vérifier la surface de l'assemblage combustible (30).

2. Dispositif d'inspection (10) selon la revendication 1, **caractérisé par le fait que** l'au moins une caméra (2.2.6) est disposée de manière pivotante dans le bloc de caméra (2.2.5) muni d'un entraînement (2.2.7) pour faire tourner ladite au moins une caméra.

3. Dispositif d'inspection (10) selon la revendication 2, **caractérisé par le fait que** le nombre de caméras (2.2.6) dans le bloc de caméras (2.2.5) est de 1 ou 2 ou 3 et les caméras (2.2.6) sont disposées pour tourner au moyen de l'entraînement (2.2.7) dans différentes positions pour faciliter le balayage de tous les côtés de l'assemblage combustible (30).

4. Dispositif d'inspection (10) selon la revendication 3, **caractérisé par le fait que** le nombre de caméras (2.2.6) dans le bloc de caméras (2.2.5) est de 2 ou 3.

5. Dispositif d'inspection (10) selon l'une quelconque des revendications 1 à 4, **caractérisé par le fait que** le bloc d'inspection (2.2) est équipé de trois glissières (2.2.1) tournées à des angles de 120° dans la section transversale et fixées les unes aux autres à l'aide de traverses (2.2.2), lesdites glissières (2.2.1) étant munies d'un anneau mobile (2.2.4) disposé pour se déplacer le long de celles-ci, ledit anneau mobile (2.2.4) étant muni de ladite au moins une sonde de mesure.

6. Dispositif d'inspection (10) selon la revendication 5, **caractérisé par le fait qu'il** y a trois sondes de mesure sur l'anneau mobile (2.2.4), les trois sondes de mesure étant disposées à des angles de 120° les unes par rapport aux autres dans un plan pour mesurer une flèche et une torsion de l'assemblage combustible (30) à inspecter.

7. Dispositif d'inspection selon l'une quelconque des revendications 1 à 6, **caractérisé par le fait que** le moyen de préhension (2.3) est conçu pour abaisser et lever le bloc d'inspection (2.2).

8. Procédé d'inspection d'assemblages combustibles (30) disposés dans un panier de stockage (40) dans une piscine à combustible (20) à l'aide du dispositif d'inspection (10) selon la revendication 1, pendant lequel un état des assemblages combustibles (30) est vérifié,*
dans lequel un dispositif de positionnement mobile (1) ayant des moyens d'inspection est installé dans la piscine à combustible dans laquelle l'inspection doit être réalisée en premier,
puis le dispositif d'inspection (10) est placé dans une position prédéfinie de l'assemblage combustible (30) à inspecter,
dans ladite position, le bloc d'inspection est abaissé au panier de stockage (40) et saisit l'assemblage combustible (30) dans ladite position,
l'assemblage combustible (30) est levé à partir du panier de stockage (40) jusqu'à au moins une hauteur nécessaire pour réaliser l'inspection,
l'assemblage combustible (30) est stabilisé pour mesurer les paramètres géométriques de l'assemblage combustible (30),
au moins les paramètres géométriques requis de l'assemblage combustible (30) sont mesurés dans ladite position stabilisée de l'assemblage combustible (30) par au moins une sonde de mesure, et
l'assemblage combustible (30) est réintroduit dans le panier de stockage (40) une fois ladite mesure terminée,
dans lequel des caméras (2.2.6) réalisent un contrôle visuel de la première moitié de la surface de l'assemblage combustible (30) pendant le levage de l'assemblage combustible (30) à partir du panier de stockage (40), puis les caméras (2.2.6) sont tournées d'un angle respectif pour permettre un contrôle visuel de la seconde moitié de la surface de l'assemblage combustible inspecté (30), et les caméras réalisent le contrôle visuel de la seconde moitié de la surface de l'assemblage combustible inspecté (30) pendant le mouvement d'introduction de l'assemblage combustible inspecté (30) dans le panier de stockage (40).
